# DEMANDE DE BREVET EUROPEEN

(11) **EP 4 371 813 A1**
(43) Date de publication de la demande: **22.05.2024**
(21) Numéro de dépôt: 23210211.1
(22) Date de dépôt: 15.11.2023
(51) Int. Cl.: B60N 2/00, B60N 2/02, B60R 16/02, B60R 21/015

(54) **VEHICULE AUTOMOBILE COMPRENANT UN SIEGE AMOVIBLE DOMAINE TECHNIQUE DE L'INVENTION**

(30) Priorité: 15.11.2022 IN 202211065376; 29.12.2022 FR 2214635
(71) Demandeur: Renault s.a.s, 92100 Boulogne Billancourt (FR)
(72) Inventeur: AVAPALLI-INDIRAN, Saravanan, 603002 Kancheepuram (IN); BATIANEL, Eric, 78280 Guyancourt (FR); BENARD, Sebastien, 78640 Villiers-saint-Fréderic (FR); DE-OLIVEIRA, Dione, 83070-900 Sao Jose dos Pinhais (BR); PACHECO, David, Córdoba (CO)

(57) **Abrégé**

L'invention concerne un véhicule automobile (100) comprenant
un châssis (110),
un siège automobile (120) monté de façon amovible sur le châssis et comportant un capteur et un premier câble de connexion électrique connecté au capteur et présentant un premier connecteur à une extrémité libre,
une boîte de connexion électrique (130) fixée au châssis, sous le siège lorsque ce dernier est monté sur le châssis, et comprenant un corps principal et un couvercle configuré pour permettre l'accès à l'intérieur du corps principal, et
un second câble de connexion électrique connecté à un circuit électronique du véhicule et présentant, à une extrémité libre, un second connecteur adapté à être connecté au premier connecteur dans la boîte de connexion.

Selon l'invention, l'extrémité libre du premier câble est libre par rapport au siège et le corps principal permet l'insertion de deux doigts pour connecter ou déconnecter manuellement le premier connecteur et le second connecteur.

## Description

### DOMAINE TECHNIQUE DE L'INVENTION

La présente invention concerne de manière générale la connexion électrique d'un siège amovible à un réseau électrique de véhicule automobile.

Elle concerne plus particulièrement un véhicule automobile comprenant :
- un châssis,
- un siège automobile qui est monté de façon amovible sur le châssis et qui comporte un capteur et un premier câble de connexion électrique, ledit premier câble de connexion électrique étant connecté au capteur et présentant, à une extrémité libre, un premier connecteur,
- une boîte de connexion électrique qui est fixée au châssis, sous le siège automobile lorsque ce dernier est monté sur le châssis, et qui comprend un corps principal et un couvercle configuré pour permettre l'accès à l'intérieur du corps principal, et
- un second câble de connexion électrique qui est connecté à un circuit électrique du véhicule automobile et qui présente, à une extrémité libre, un second connecteur adapté à être connecté au premier connecteur dans la boîte de connexion électrique.

L'invention trouve une application particulièrement avantageuse dans la connexion d'un système de détection du verrouillage de ceintures de sécurité pour des sièges amovibles d'un véhicule utilitaire.

### ETAT DE LA TECHNIQUE

Au sein d'un véhicule automobile, il est connu d'équiper les sièges avant d'un système de détection de ceinture de sécurité (ou « SBR » pour « Seat Belt Reminder » en anglais). Ces systèmes de détection permettent à une unité de traitement du véhicule de détecter si un passager assis sur un siège concerné a ou non attaché sa ceinture de sécurité, et d'émettre au besoin un signal visuel et/ou sonore à l'intention du conducteur.

Ces systèmes de détection sont pour cela connectés à l'unité de traitement par des câbles de connexion électrique.

On souhaite alors équiper les sièges arrière du même type de systèmes.

Les véhicules professionnels, tels que les utilitaires, mais également certains véhicules particuliers, sont équipés de sièges amovibles afin de favoriser soit la capacité d'accueil de passagers, soit la capacité de chargement du coffre. Afin d'équiper ces sièges amovibles d'un système de détection SBR, il est alors nécessaire de faire en sorte que ces sièges puissent être connectés ou déconnectés du circuit électrique du véhicule.

Une solution consiste alors à équiper les sièges amovibles de connecteurs fixés sous les assises et prévus pour venir s'engager automatiquement sur des connecteurs complémentaires présents sur le plancher du véhicule lors de la mise en place du siège dans le véhicule. Cette solution, bien qu'efficace, est sujette à des risques de contamination, tels que poussières et liquides, pouvant endommager ou obstruer les connecteurs. Elle ne constitue donc pas une solution fiable pour des véhicules utilitaires. De plus, cette solution est lourde et coûteuse.

### PRESENTATION DE L'INVENTION

Afin de remédier aux inconvénients précités de l'état de la technique, la présente invention propose d'établir la connexion électrique entre le siège et le véhicule manuellement, dans une boîte permettant de protéger les connecteurs.

Plus particulièrement, on propose selon l'invention un véhicule automobile tel que défini dans l'introduction, dans lequel il est prévu que l'extrémité libre du premier câble de connexion électrique est libre par rapport au siège automobile et dans lequel la boîte de connexion électrique permet l'insertion de deux doigts à l'intérieur du corps principal, pour permettre de connecter ou déconnecter manuellement le premier connecteur et le second connecteur.

L'espace dans la boîte qui permet l'insertion de deux doigts est ici prévu de chaque côté des connecteurs, et il est ouvert sur le dessus. Ainsi, l'usager peut venir pincer à deux doigts ces connecteurs afin de les brancher ensemble ou de les débrancher.

Ici, le premier câble de connexion électrique étant libre, il est possible de le déplacer alors que le siège reste dans sa position. Il est donc possible de venir le connecter ou le déconnecter indépendamment de la position du siège. La connexion électrique entre le premier câble et le second câble pouvant se faire manuellement, elle constitue donc un gain de poids et de coût conséquent par rapport à une connexion automatique.

De plus, la connexion ayant lieu dans une boîte, les connecteurs sont toujours bien protégés. En effet, les connecteurs sont alors à l'abri de manipulation, de chute d'objet, mais également de contaminations extérieures tels que des liquides ou de la poussière. L'utilisation d'un couvercle fermé et plein permet également de protéger les connecteurs de liquide, comme en cas de présence d'eau sur le plancher du véhicule.

D'autres caractéristiques avantageuses et non limitatives du véhicule automobile conforme à l'invention, prises individuellement ou selon toutes les combinaisons techniquement possibles, sont les suivantes :
- la boîte de connexion électrique comprend une première fente sur un premier côté du corps principal, la première fente est configurée pour faire pénétrer le premier câble de connexion électrique dans ladite boîte de connexion électrique, la boîte de connexion électrique comprend une seconde fente sur un second côté opposé au premier côté du corps principal et configurée pour faire pénétrer le second câble de connexion électrique dans la boîte de connexion électrique ;
- le couvercle de la boîte de connexion électrique comprend, sur une face en regard du corps principal, des rainures s'étendant parallèlement au premier côté et second côté ;
- le corps principal de la boîte de connexion électrique comprend un fond et au moins une ouverture pratiquée dans le fond ;
- le second câble de connexion électrique est fixé dans la boîte de connexion électrique ;
- le siège automobile comprend un moyen de fixation temporaire de l'extrémité libre du premier câble de connexion électrique ;
- la boîte de connexion électrique est fixée sur le châssis grâce à des moyens de fixation situés à l'extérieur d'un logement délimité par le corps principal de la boîte de connexion électrique ;
- le corps principal de la boîte de connexion électrique comprend un fond et le second connecteur est positionné à une distance non nulle du fond et lorsque le premier connecteur est connecté au second connecteur, le premier connecteur est positionné dans la continuité du second connecteur, à une distance non nulle du fond de la boîte ;
- il est prévu un tapis comprenant une fenêtre configurée pour permettre l'accès à la boîte de connexion électrique, dont la périphérie est prise en sandwich entre le couvercle et le corps principal de la boîte de connexion électrique ; et
- le couvercle comporte des moyens d'encliquetage sur le corps principal.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique d'un véhicule automobile conforme à l'invention, sur laquelle apparaît un siège connecté à une boîte de connexion électrique ;
[Fig. 2] est une vue schématique de l'intérieur du véhicule automobile de la figure 1 ;
[Fig. 3] est une vue schématique du corps principal de la boîte de connexion électrique de la figure 1, dans lequel un premier câble de connexion électrique et un second câble de connexion électrique sont connectés ;
[Fig. 4] est une vue schématique en perspective de la boîte de connexion électrique de la figure 1, avec le couvercle fermé ;
[Fig. 5] est une vue schématique en perspective de la boîte de connexion électrique de la figure 1, avec le couvercle ouvert ; et
[Fig. 6] est une vue schématique en coupe de la boîte de connexion électrique de la figure 1, avec le couvercle fermé, positionnée sur le châssis du véhicule automobile.

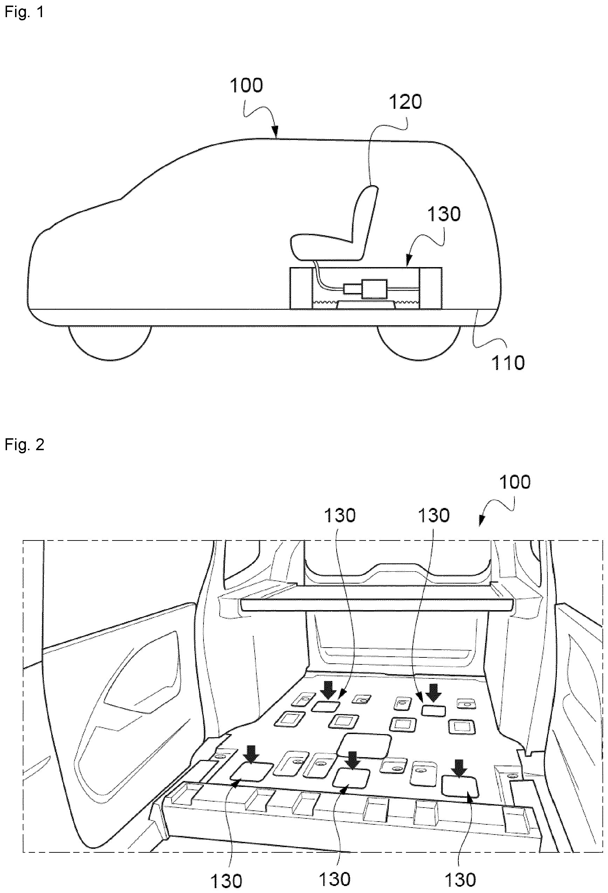

Un véhicule automobile 100 est représenté en figure 1. Ce véhicule automobile 100 comprend un châssis 110 et des sièges fixés sur le châssis 110. Le véhicule automobile 100 est ici un véhicule utilitaire.

Ce véhicule automobile 100 comporte des sièges avant (un siège conducteur et un siège passager) et au moins un siège arrière. Dans le mode de réalisation illustré sur les figures, il comporte ici cinq sièges arrière disposés sur deux rangs.

Afin de pouvoir transporter du matériel ou des personnes, il est prévu que ces sièges arrière soient amovibles.

Lorsque tous les sièges amovibles 120 sont fixés sur le châssis 110, le véhicule automobile 100 peut alors transporter jusque 7 passagers (en comptant un conducteur et un passager avant). Lorsque tous les sièges amovibles 120 sont détachés du châssis 110, le véhicule automobile 100 présente une grande capacité volumique de transport de matériel.

Sur la figure 2, on a représenté une partie arrière de l'intérieur du véhicule automobile 100 lorsque les sièges amovibles 120 ont été détachés du châssis 110. On y observe cinq boîtes de connexion électrique 130, une placée sous chaque emplacement de siège amovible 120.

Les sièges amovibles 120 (et les boîtes de connexion électrique 130 associées) étant tous identiques, un seul d'entre eux sera ici plus précisément décrit.

Ce siège amovible 120 comprend classiquement un dossier et une assise. Le dossier peut être rabattu sur l'assise, le siège amovible 120 est alors en position replié. Des fixations avant et arrière sont prévus pour permettre de détacher l'arrière du siège indépendamment de la fixation avant qui reste attachée. Ainsi, le dossier et l'assise peuvent être rabattus vers l'avant, en position escamotée. Dans cette position, il est possible de détacher l'avant afin de sortir le siège amovible 120 de l'habitacle.

Le siège amovible 120 est équipé d'un capteur (non visible sur les figures). Ce capteur permet par exemple de détecter la présence d'un utilisateur assis sur le siège amovible 120. Le capteur est ici une nappe de détection de pression intégrée dans la garniture de l'assise du siège amovible 120.

Le siège amovible 120 comprend également une boucle de ceinture de sécurité, permettant de recevoir et bloquer un verrou de sangle de ceinture de sécurité. Cette boucle est électronisée pour détecter la présence du verrou dans la boucle.

Le véhicule automobile 100 comporte alors une unité de traitement électronique et/ou informatique programmée pour recevoir des signaux du capteur et de la boucle de ceinture de sécurité, et pour émettre un signal d'alarme (haptique, sonore ou visuel) pour alerter le conducteur si un utilisateur est détecté sur le siège amovible 120 et que la ceinture de sécurité n'est pas attachée.

Afin de permettre à l'unité de traitement de recevoir ces signaux, la nappe de détection de pression ainsi que la boucle de ceinture électronisée sont ici adaptés à être reliées au circuit électrique de la voiture de façon filaire. Pour garantir l'amovibilité du siège amovible 120, il est prévu que la connexion électrique du siège amovible 120 avec le véhicule automobile 100 puisse être coupée physiquement.

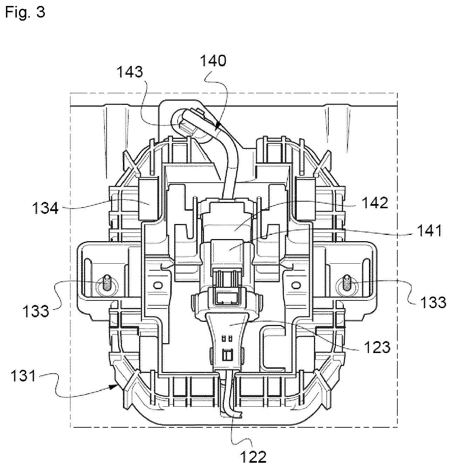

La nappe de détection de pression et la bouche de ceinture électronisée sont alors ici connectées électriquement à un premier câble de connexion électrique 122 comportant un premier connecteur 123 à son extrémité libre (figure 3).

Le premier connecteur 123 peut être connecté au circuit électrique du véhicule automobile 100 (et donc à l'unité de traitement) via un second connecteur 141. Ce second connecteur 141 est pour cela relié via un second câble de connexion électrique 140 au circuit électrique du véhicule automobile 100. Le premier connecteur 123 et le second connecteur 141 peuvent être connectés ou déconnectés manuellement.

De préférence, ils sont connectés lorsque le siège amovible 120 est installé sur le châssis 110 du véhicule automobile 100 et déconnectés lorsque le siège amovible 120 doit être retiré du véhicule.

Lorsque les deux connecteurs 132, 141 sont déconnectés, l'extrémité libre du premier câble de connexion électrique 122 comportant le premier connecteur 123 est libre par rapport au siège amovible 120. Cela signifie que le premier câble de connexion 122 n'est pas contraint mécaniquement autrement que par sa connexion avec le capteur du siège amovible 120. Le premier câble de connexion 122 peut alors être déplacé manuellement indépendamment du siège. En d'autres termes, le premier connecteur 123 peut être déplacé sans que ce déplacement n'entraîne de mouvement du reste du siège amovible (dans une certaine limite correspondant à la longueur maximum du premier câble de connexion électrique 122). A contrario, il est possible de basculer le siège amovible 120 depuis sa position d'utilisation vers sa position repliée ou escamotée sans que ce mouvement ne déconnecte les deux connecteurs 132, 141.

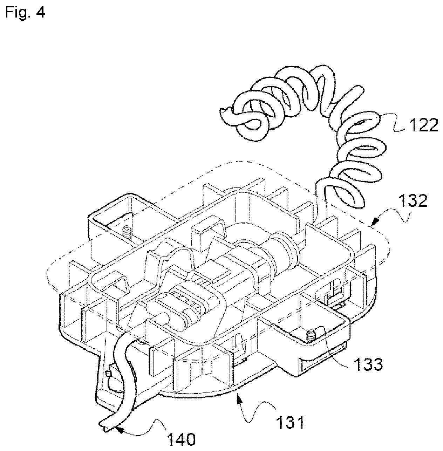

Pour que le premier câble de connexion électrique 122 ne repose pas sur le châssis sur une longueur (et que les utilisateurs s'y prennent les pieds), ce câble présente, au repos, une forme enroulée en spirale (voir figure 4).

Dans le même dessein, le siège amovible 120 peut comprendre un moyen de fixation temporaire (non représenté) permettant de fixer temporairement l'extrémité libre du premier câble de connexion électrique 122 à l'assise lorsque le premier connecteur 123 est déconnecté. Par exemple, le moyen de fixation temporaire peut être un clip de fixation permettant de maintenir le câble de connexion lorsque celui-ci y a été inséré.

Sur la figure 3, le premier câble de connexion électrique 122 et le second câble de connexion électrique 140 sont représentés en position connectée.

Ici, le premier connecteur 123 (côté siège) est un connecteur femelle, et le second connecteur 141 est un connecteur mâle, mais l'inverse serait possible.

Ces connecteurs pourraient être de tout type, pour autant qu'ils puissent être connectés et déconnectés manuellement.

Il est en outre prévu des moyens mécaniques permettant de bloquer ces connecteurs à l'état connecté.

Ici, le premier connecteur 123 comprend une encoche et le second connecteur 141 comprend un bouton poussoir de formes identiques, en négatif. Le bouton poussoir est mobile par rapport au second connecteur 141 entre une position relâchée dans laquelle il peut venir s'emboîter dans l'encoche et une position enfoncée dans laquelle il ne forme pas obstacle à la connexion et à la déconnexion des deux connecteurs. En pratique, l'utilisateur est amené à appuyer sur le bouton poussoir pour faciliter la connexion des deux connecteurs. Lorsque les connecteurs sont connectés, le bouton poussoir vient se loger automatiquement dans l'encoche, ce qui permet de sécuriser la connexion et d'éviter que les connecteurs se déconnectent avec des vibrations ou des mouvements du véhicule automobile 100.

Dans le but de protéger le second connecteur 141 et le second câble de connexion électrique 140, la jonction entre ce connecteur et le câble est recouverte d'une protection 142. De préférence, la protection 142 est en plastique souple.

Afin de protéger les connecteurs, la connexion entre le premier connecteur 123 et le second connecteur 141 s'effectue dans la boîte de connexion électrique 130 qui est fixée au châssis 110.

La boîte de connexion électrique 130 est située sous le siège amovible 120 lorsque ce dernier est monté sur le châssis 110 et est en position d'utilisation. La boîte de connexion 130 comprend un corps principal 131 et un couvercle 132 configuré pour permettre l'accès à l'intérieur du corps principal 131.

La figure 3 représente le corps principal 131 de la boîte de connexion électrique 130 vu du dessus.

Le corps principal 131 est de préférence de forme parallélépipédique creux et comprend un fond rectangulaire à partir des bords duquel s'élèvent quatre côtés. Il délimite ainsi un espace de connexion ouvert d'un côté (ici sur le dessus).

De préférence, la boîte de connexion électrique 130 est en matière non conductrice électriquement, ici en matière plastique.

La boîte de connexion électrique 130 comprend une première fente sur un premier côté du corps principal 131, permettant de faire pénétrer l'extrémité libre du premier câble de connexion électrique 122 dans l'espace de connexion.

De plus, la boîte de connexion électrique 130 comprend une seconde fente sur un second côté opposé au premier côté du corps principal 131, permettant de faire pénétrer le second câble de connexion électrique 140 dans l'espace de connexion.

Afin de pouvoir connecter ou déconnecter les connecteurs manuellement, la largeur du corps principal 131 de la boîte de connexion électrique 130 permet l'insertion d'un doigt de chaque côté des connecteurs. Par exemple, il peut être prévu au moins un centimètre de chaque côté des connecteurs (entre la paroi latérale de la boîte et chaque côté des connecteurs). Les doigts peuvent donc s'insérer par l'ouverture de l'espace de connexion, et pincer ainsi les connecteurs.

Pour optimiser la largeur du corps principal 131, tout en permettant l'insertion de doigts, la boîte de connexion électrique 130 est fixée au châssis 110 grâce à des moyens de fixation 133 situés à l'extérieur de l'espace de connexion. Par exemple, les moyens de fixation 133 sont ici deux goujons soudés au châssis, qui s'élèvent à partir de ce dernier et qui traversent des ouvertures prévues sur des plaquettes fixées au corps principal, à l'extérieur de ses quatre côtés.

Le second câble de connexion électrique 140 est de préférence toujours présent dans la boîte de connexion électrique 130. Pour plus de stabilité, et afin de ne pas bouger lorsqu'il n'est pas connecté, il est ici fixé dans la boîte de connexion électrique 130. La fixation est effectuée ici notamment grâce à un clip de fixation 143 sur le corps principal 131 de la boîte de connexion électrique 130.

Le clip de fixation 143 peut, par exemple, être situé à l'extérieur de l'espace de connexion, et à proximité de la seconde fente. Ce clip de fixation forme une pince située sur une plaquette fixée au corps principal, à l'extérieur de ses quatre côtés. Cette pince est ouverte sur le dessus de façon qu'il est possible d'y clipper le second câble de connexion électrique 140.

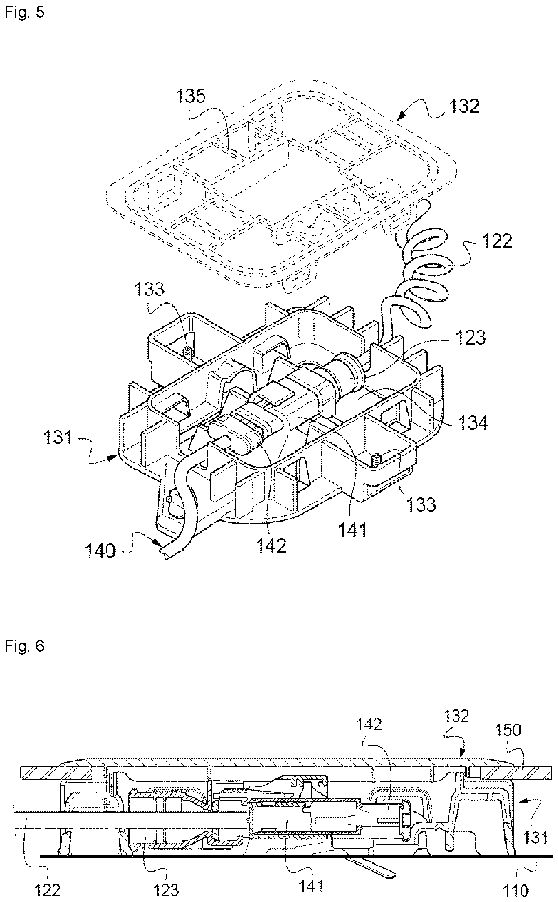

Les figures 4 et 5 montrent une représentation schématique en perspective de la boîte de connexion électrique 130.

Le couvercle 132, représenté en transparence sur les figures, permet de protéger l'intérieur de la boîte de connexion électrique 130 des poussières et autres contaminations du véhicule automobile 100.

Il pourrait être monté mobile sur le corps principal 131 de la boîte de connexion électrique 130, par exemple de façon à pouvoir basculer sur celui-ci. Mais de préférence, pour faciliter l'accès au volume de connexion, il est amovible. Le couvercle 132 comprend ici alors des moyens d'encliquetage adaptés à s'accrocher ou se décrocher du corps principal 131, sans outil.

Ici, le couvercle 132 présente une forme de rectangle aux coins arrondis. Il comporte une paroi principale de dimensions supérieures à celles du volume de connexion, pour fermer entièrement ce dernier, et quatre pattes d'encliquetage réparties à ses quatre coins. Chaque languette d'encliquetage comporte une patte flexible qui porte, à son extrémité, une dent en saillie. Le corps principal 131 comporte des cavités de formes complémentaires des saillies permettant à celles-ci de s'y accrocher.

La boîte de connexion électrique 130 est représentée avec le couvercle 132 fermé sur la figure 4, et avec le couvercle 132 ouvert sur la figure 5.

Afin de protéger les deux connecteurs 123, 141 de contaminants tels que des liquides, le couvercle 132 de la boîte de connexion électrique 130 comprend, sur une face en regard du corps principal 131, des rainures 135. Ces rainures 135 permettent d'acheminer le contaminant à distance de la zone de connexion des câbles de connexion électrique. Par exemple, une partie des rainures 135 s'étendent parallèlement au premier côté et second côté comprenant les fentes, de façon à bloquer l'écoulement de contaminant vers le centre du corps de boîte. Ici, d'autre rainures s'étendent orthogonalement au premier côté et second côté.

De manière préférentielle, pour protéger les connecteurs en cas d'entrée de contaminants à l'intérieur de la boîte de connexion électrique 130, le second connecteur 141 est positionné sur une partie surélevée par rapport au fond de la boîte de connexion électrique 130 (et donc par rapport au châssis 110). Cette partie présente ici un moyen de fixation du connecteur, se présentant sous la forme d'une patte dans laquelle le connecteur peut être enfiché.

Le second connecteur 141 est alors positionné à une distance non nulle du fond du corps 131 de la boîte 130. Lorsque le premier connecteur 123 est connecté au second connecteur 141, le premier connecteur 123 est alors positionné dans la continuité du second connecteur 141, à une distance non nulle du fond de la boîte de connexion électrique 130. Grâce à cette surélévation, si de l'eau tombait dans la boîte de connexion électrique 130, alors elle serait amenée vers le fond de la boîte de connexion électrique 130 par gravité, loin de la connexion.

Par ailleurs, afin d'éviter une accumulation d'eau dans le fond de la boîte de connexion électrique 130, le fond du corps principal 131 comprend au moins une ouverture 134. L'eau peut ainsi s'écouler par l'ouverture 134 vers le châssis 110 du véhicule automobile 100. Ici, le fond est ajouré sur plus de la moitié de sa superficie.

Sur la figure 6, la boîte de connexion électrique 130 est représenté en coupe transversale. Le couvercle 132 de la boîte 130 est fermé sur le corps principal 131.

Afin d'offrir un plancher plat pour un usage optimal du véhicule automobile 100 lorsque le siège amovible 120 est détaché du châssis 110, il est prévu que la boîte de connexion électrique 130 soit incorporée dans le plancher de l'habitacle du véhicule automobile 100.

Ce dernier présente donc une cavité dans laquelle se loge le corps principal 131, de profondeur égale à la hauteur de ce dernier.

Ainsi, le plancher peut éventuellement être revêtu d'un tapis 150 venant se poser sur l'extrémité haute du corps principal 131 de la boîte de connexion électrique 130.

Le châssis 110 est ici en tôle.

Le tapis 150 comprend classiquement une couche insonorisante.

Le tapis 150 comprend une fenêtre configurée pour permettre l'accès au volume de connexion délimité par la boîte de connexion électrique 130. Afin d'obtenir un plancher plat, la périphérie de la fenêtre est prise en sandwich entre le couvercle 132 et le corps principal 131 de la boîte de connexion électrique 130.

Classiquement, le tapis 150 est mis en place dans le véhicule automobile 100 après l'installation de la boîte de connexion électrique 130. Le couvercle 132 vient se clipper au corps principal 131 de la boîte de connexion électrique 130 et en recouvrement du tapis 150.

Ainsi, grâce à la présente invention, le siège amovible 120 connecté au circuit électronique du véhicule automobile 100 peut être extrait (c'est-à-dire détaché du châssis 110) grâce aux étapes suivantes :
- Rabat du dossier du siège amovible 120 en position repliée,
- Désengagement de la fixation arrière du siège amovible 120,
- Basculement du siège amovible 120 sur ses fixations avant en position escamotée,
- Ouverture du couvercle 132 de la boîte de connexion électrique 130,
- Déconnexion du premier connecteur 123 par rapport au second connecteur 141,
- Extraction du premier câble de connexion électrique 122 de la boîte de connexion électrique 130,
- Fermeture du couvercle 132 de la boîte de connexion électrique 130,
- Maintien de l'extrémité du câble libre du premier câble de connexion électrique 122 grâce au moyen de fixation temporaire,
- Désengagement des fixations avant du siège amovible 120, et
- Extraction du siège amovible 120 du châssis 110.

La présente invention n'est nullement limitée au mode de réalisation décrit et représenté, mais l'homme du métier saura y apporter toute variante conforme à l'invention.

## Revendications

1. Véhicule automobile (100) comprenant :
un châssis (110),
un siège automobile (120) qui est monté de façon amovible sur le châssis (110) et qui comporte un capteur et un premier câble de connexion électrique (122), ledit premier câble de connexion électrique (122) étant connecté au capteur et présentant, à une extrémité libre, un premier connecteur (123),
une boîte de connexion électrique (130) qui est fixée au châssis (110), sous le siège automobile (120) lorsque ce dernier est monté sur le châssis (110), et qui comprend un corps principal (131) et un couvercle (132) configuré pour permettre l'accès à l'intérieur du corps principal (131), et
un second câble de connexion électrique (140) qui est connecté à un circuit électrique du véhicule automobile (100) et qui présente, à une extrémité libre, un second connecteur (141) adapté à être connecté au premier connecteur (123) dans la boîte de connexion électrique (130),
**caractérisé en ce que** l'extrémité libre du premier câble de connexion électrique (122) est libre par rapport au siège automobile (120) et
**en ce que** la boîte de connexion électrique (130) permet l'insertion de deux doigts dans le corps principal (131) pour connecter ou déconnecter manuellement le premier connecteur (123) et le second connecteur (141).

2. Véhicule automobile (100) selon la revendication 1, dans lequel la boîte de connexion électrique (130) comprend une première fente sur un premier côté du corps principal (131), la première fente étant configurée pour faire pénétrer le premier câble de connexion électrique (122) dans ladite boîte de connexion électrique (130), la boîte de connexion électrique (130) comprend une seconde fente sur un second côté opposé au premier côté du corps principal (131) et configurée pour faire pénétrer le second câble de connexion électrique (140) dans la boîte de connexion électrique (130).

3. Véhicule automobile (100) selon la revendication 2, dans lequel le couvercle (132) de la boîte de connexion électrique (130) comprend, sur une face en regard du corps principal (131), des rainures (135) s'étendant parallèlement au premier côté et second côté.

4. Véhicule automobile (100) selon l'une des revendications 1 à 3, dans lequel le corps principal (131) de la boîte de connexion électrique (130) comprend un fond et au moins une ouverture (134) pratiquée dans le fond.

5. Véhicule automobile (100) selon l'une des revendications 1 à 4, dans lequel le second câble de connexion électrique (140) est fixé dans la boîte de connexion électrique (130).

6. Véhicule automobile (100) selon l'une des revendications 1 à 5, dans lequel le siège automobile (120) comprend un moyen de fixation temporaire de l'extrémité libre du premier câble de connexion électrique (122).

7. Véhicule automobile (100) selon l'une des revendications 1 à 6, dans lequel la boîte de connexion électrique (130) est fixée sur le châssis (110) grâce à des moyens de fixation (133) situés à l'extérieur d'un logement délimité par le corps principal (131) de la boîte de connexion électrique (130).

8. Véhicule automobile (100) selon l'une des revendications 1 à 7, dans lequel le corps principal (131) de la boîte de connexion électrique (130) comprend un fond et dans lequel le second connecteur (141) est positionné à une distance non nulle du fond et lorsque le premier connecteur (123) est connecté au second connecteur (141), le premier connecteur (123) est positionné dans la continuité du second connecteur (141), à une distance non nulle du fond de la boîte (130).

9. Véhicule automobile (100) selon l'une des revendications 1 à 8, dans lequel il est prévu un tapis (150) comprenant une fenêtre configurée pour permettre l'accès à la boîte de connexion électrique (130), dont la périphérie est prise en sandwich entre le couvercle (132) et le corps principal (131) de la boîte de connexion électrique (130).

10. Véhicule automobile (100) selon la revendication 9, dans lequel le couvercle (132) comporte des moyens d'encliquetage sur le corps principal (131).
